# EUROPEAN PATENT APPLICATION

(11) **EP 4 637 269 A1**
(43) Date of publication of application: **22.10.2025**
(21) Application number: 24170400.6
(22) Date of filing: 16.04.2024
(51) Int. Cl.: H05B 45/34, H05B 47/28, H02J 1/10, H05B 45/37, H02M 1/00

(54) **DRIVER SYSTEM FOR SUPPLYING AN LED LOAD WITH A DC VOLTAGE**

(71) Applicant: Tridonic GmbH & Co. KG, 6851 Dornbirn (AT)
(72) Inventor: Romano, Fabio, 6851 Dornbirn (AT); Schneider, Miguel Philipp, 6851 Dornbirn (AT)
(74) Representative: Rupp, Christian

(57) **Abstract**

Disclosed is a driver system (1) for supplying an LED load (2) with a DC voltage (21). The driver system (1) comprises a plurality of LED drivers (11), having respective control circuits (12) and parallel-connected output ports (13). The control circuits (12) are respectively configured to regulate the DC voltage (21) in accordance with a respective drooping output voltage curve (14, 15); and to shift the respective output voltage curve (14, 15) by a negative voltage offset (16) if a respective driver temperature exceeds a maximum temperature threshold. This avoids imbalanced power supply in particular at maximum power output, overdimensioning of the drivers (11), and additional external sensors.

## Description

### Technical Field

The present disclosure relates generally to the field of lighting technology, and in particular to a driver system for supplying an LED load with a DC voltage, a lighting system comprising the driver system, and a method of operating the driver system.

### Background Art

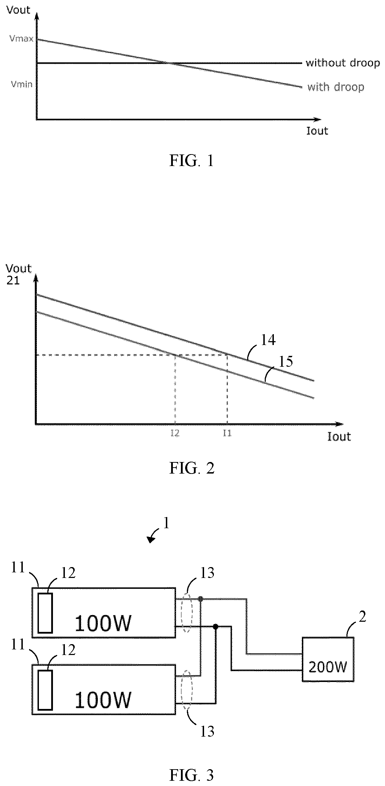

There are various approaches of driving high-power LED loads by means of parallel-connected LED drivers, such as "voltage droop control". Voltage droop may refer to an intentional loss in output voltage from a device as it drives a load. In other words, the output voltage of the respective driver depends on its output current (see FIG. 1). If all LED drivers have such an output characteristic, their output ports can easily be connected in parallel.

In reality, the output characteristics of parallel-connected drivers will never be fully congruent. There will always be variations due to component tolerances, miscalibration etc. This results in different operating points of the parallel-connected drivers and output currents / powers (see FIG. 2).

An imbalance in load balancing is especially adverse at maximum power output, and requires overdimensioning of the parallel-connected drivers.

In the example of FIG. 3, one of the LED drivers 11 may supply a higher current / power to the load 2 than another one of the LED drivers 11 and thus exceed its nominal power specification of 100W.

### Summary

It is an object to overcome the above-mentioned and other drawbacks.

The foregoing and other objects are achieved by the features of the independent claims. Further implementation forms are apparent from the dependent claims, the description and the figures.

According to a first aspect, a driver system is provided for supplying an LED load with a DC voltage. The driver system comprises a plurality of LED drivers, having respective control circuits and parallel-connected output ports. The control circuits are respectively configured to regulate the DC voltage in accordance with a respective drooping output voltage curve; and to shift the respective output voltage curve by a negative voltage offset if a respective driver temperature exceeds a maximum temperature threshold.

The control circuits may respectively be configured to further shift the respective shifted output voltage curve by the negative voltage offset if the respective driver temperature still exceeds the maximum temperature threshold following a first settling period since a previous shift of the respective output voltage curve.

The control circuits may respectively be configured to further shift the respective shifted output voltage curve by a positive voltage offset if the respective driver temperature falls short of a minimum temperature threshold following the first settling period since the previous shift of the respective output voltage curve.

The control circuits may respectively be configured to store a respective total voltage offset following a second settling period since the previous shift of the respective output voltage curve.

The second settling period may comprise a multiple of the first settling period.

The control circuits may respectively be configured to deploy the respective total voltage offset upon a restart or reset.

The respective control circuit may comprise a microcontroller.

According to a second aspect, a lighting system is provided, comprising a driver system according to the first aspect; and an LED load connected to the parallel-connected output ports of the plurality of LED drivers of the driver system.

According to a third aspect, a method of operating a driver system is provided for supplying an LED load with a DC voltage. The driver system comprises a plurality of LED drivers having parallel-connected output ports. The method comprises regulating the DC voltage in accordance with a respective drooping output voltage curve; and shifting the respective output voltage curve by a negative voltage offset if a respective driver temperature exceeds a maximum temperature threshold.

The method may be performed by a driver system according to the first aspect.

### Advantageous Effects

If a driver temperature exceeds a maximum temperature threshold, the driver's drooping output voltage curve is shifted to lower voltage values, resulting in an output voltage curve that depends on the driver's temperature.

As the driver's output current / power is reduced, the other driver must supply a higher output current / power on its part.

This results in a self-calibrating and improved load balancing especially at maximum power output, substantially eliminates overdimensioning and does not require additional external sensors.

### Brief Description of Drawings

The above-described aspects and implementations will now be explained with reference to the accompanying drawings, in which the same or similar reference numerals designate the same or similar elements.

The drawings are to be regarded as being schematic representations, and elements illustrated in the drawings are not necessarily shown to scale. Rather, the various elements are represented such that their function and general purpose become apparent to those skilled in the art.
- FIG. 1: illustrates voltage droop control with reference to constant voltage control;
- FIG. 2: illustrates different operating points of parallel-connected drivers;
- FIG. 3: illustrates a driver system in accordance with the present disclosure;
- FIG. 4: illustrates a shift of an output voltage curve of one of the drivers of FIG. 3 by a negative voltage offset if a driver temperature exceeds a maximum temperature threshold; and
- FIG. 5: illustrates a method of operating a driver system in accordance with the present disclosure.

### Detailed Descriptions of Drawings

In the following description, reference is made to the accompanying drawings, which form part of the disclosure, and which show, by way of illustration, specific aspects of implementations of the present disclosure or specific aspects in which implementations of the present disclosure may be used. It is understood that implementations of the present disclosure may be used in other aspects and comprise structural or logical changes not depicted in the figures. The following detailed description, therefore, is not to be taken in a limiting sense, and the scope of the present disclosure is defined by the appended claims.

For instance, it is understood that a disclosure in connection with a described method may also hold true for a corresponding apparatus or system configured to perform the method and vice versa. For example, if one or a plurality of specific method steps are described, a corresponding device may include one or a plurality of units, e.g. functional units, to perform the described one or plurality of method steps (e.g. one unit performing the one or plurality of steps, or a plurality of units each performing one or more of the plurality of steps), even if such one or more units are not explicitly described or illustrated in the figures. On the other hand, for example, if a specific apparatus is described based on one or a plurality of units, e.g. functional units, a corresponding method may include one step to perform the functionality of the one or plurality of units (e.g. one step performing the functionality of the one or plurality of units, or a plurality of steps each performing the functionality of one or more of the plurality of units), even if such one or plurality of steps are not explicitly described or illustrated in the figures. Further, it is understood that the features of the various exemplary implementations and/or aspects described herein may be combined with each other, unless specifically noted otherwise.

FIG. 1 illustrates voltage droop control in contrast to constant voltage control.

All electrical systems have some amount of resistance between a supply output and a load. At high currents, even a small resistance results in a substantial voltage drop between the supply and the load. Under voltage droop control, sudden load changes simply result in this voltage drop. Under constant voltage control, sudden load changes will cause transient spikes.

In reality, there will always be variations due to component tolerances, unbalances etc., so that the output characteristics of parallel-connected drivers will never be 100% congruent. In other words, different parallel-connected drivers 11 tend to supply different output currents / powers.

FIG. 2 illustrates different operating points of parallel-connected drivers.

FIG. 3 illustrates a driver system 1 in accordance with the present disclosure for supplying an LED load 2 with a DC voltage 21.

The driver system 1 may form part of a lighting system 1, 2 which may further comprise an LED load 2 such as an LED module connected to the parallel-connected output ports 13 of the plurality of LED drivers 11 of the driver system 1.

Without loss of generality, the driver system 1 of FIG. 3 comprises two LED drivers 11.

In particular, a total nominal power of the plurality of LED drivers 11 may correspond to a nominal power of the LED load 2.

The LED drivers 11 have respective control circuits 12, such as microcontrollers.

The control circuits 12 are respectively configured to regulate the DC voltage 21 in accordance with a respective drooping output voltage curve 14, 15 (see FIG. 2).

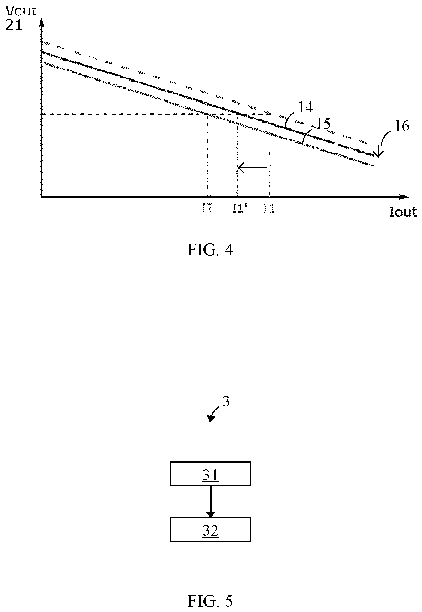

FIG. 4 illustrates a shift of an output voltage curve 14 of one of the drivers 11 of FIG. 3 by a negative voltage offset 16 if a temperature of the involved driver 11 exceeds a maximum temperature threshold.

This reduces the driver's 11 output current / power such that the other driver 11 must supply a higher output current / power on its part.

The control circuits 12 may respectively be configured to further shift the respective shifted output voltage curve 14, 15 by the negative voltage offset 16 if the respective driver temperature still exceeds the maximum temperature threshold following a first settling period since a previous shift of the respective output voltage curve 14, 15.

That is to say, the respective shifted output voltage curve 14, 15 may be shifted cyclically at defined intervals, thereby further reducing the driver's 11 output current / power repeatedly until the temperature of the involved driver 11 falls below the maximum temperature threshold.

The control circuits 12 may respectively be configured to further shift the respective shifted output voltage curve 14, 15 by a positive voltage offset (not shown) if the respective driver temperature falls short of a minimum temperature threshold following the first settling period since the previous shift of the respective output voltage curve 14, 15.

This defines a nominal temperature corridor for the drivers 11.

Further, the control circuits 12 may respectively be configured to store a respective total voltage offset following a second settling period since the previous shift of the respective output voltage curve 14, 15; and to deploy the respective total voltage offset upon a restart or reset.

In particular, the second settling period may comprise a multiple of the first settling period, because storage of the total offset may only make sense when the respective output voltage curve 14, 15 has settled.

FIG. 5 illustrates a method 3 of operating a driver system 1 in accordance with the present disclosure.

The driver system 1 is for supplying an LED load 2 with a DC voltage 21 and comprises a plurality of LED drivers 11 having parallel-connected output ports 13.

The method 3 comprises a step of regulating 31 the DC voltage 21 in accordance with a respective drooping output voltage curve 14, 15.

The method 3 further comprises a step of shifting 32 the respective output voltage curve 14, 15 by a negative voltage offset 16 if a respective driver temperature exceeds a maximum temperature threshold.

The method 3 may be performed by a driver system 1 according to the first aspect.

The present disclosure has been described in conjunction with various implementations as examples. However, other variations can be understood and effected by those persons skilled in the art and practicing the claimed matter, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation. A computer program may be stored/distributed on a suitable medium, such as an optical storage medium or a solid-state medium supplied together with or as part of other hardware, but may also be distributed in other forms, such as via the Internet or other wired or wireless telecommunication systems.

## Claims

1. A driver system (1) for supplying an LED load (2) with a DC voltage (21), the driver system (1) comprising
a plurality of LED drivers (11), having respective control circuits (12) and parallel-connected output ports (13);
the control circuits (12) respectively being configured
- to regulate the DC voltage (21) in accordance with a respective drooping output voltage curve (14, 15); and
- to shift the respective output voltage curve (14, 15) by a negative voltage offset (16) if a respective driver temperature exceeds a maximum temperature threshold.

2. The driver system (1) of claim 1,
the control circuits (12) respectively being configured
- to further shift the respective shifted output voltage curve (14, 15) by the negative voltage offset (16) if the respective driver temperature still exceeds the maximum temperature threshold following a first settling period since a previous shift of the respective output voltage curve (14, 15).

3. The driver system (1) of claim 2,
the control circuits (12) respectively being configured
- to further shift the respective shifted output voltage curve (14, 15) by a positive voltage offset if the respective driver temperature falls short of a minimum temperature threshold following the first settling period since the previous shift of the respective output voltage curve (14, 15).

4. The driver system (1) of claim 2 or claim 3,
the control circuits (12) respectively being configured
- to store a respective total voltage offset following a second settling period since the previous shift of the respective output voltage curve (14, 15).

5. The driver system (1) of claim 4,
the second settling period comprising a multiple of the first settling period.

6. The driver system (1) of claim 4 or claim 5,
the control circuits (12) respectively being configured
- to deploy the respective total voltage offset upon a restart or reset.

7. The driver system (1) of any one of the preceding claims,
the respective control circuit (12) comprising a microcontroller.

8. A lighting system (1, 2), comprising
- a driver system (1) according to any one of the claims 1 - 7; and
- an LED load (2) connected to the parallel-connected output ports (13) of the plurality of LED drivers (11) of the driver system (1).

9. A method (3) of operating a driver system (1) for supplying an LED load (2) with a DC voltage (21),
the driver system (1) comprising a plurality of LED drivers (11) having parallel-connected output ports (13);
the method (3) comprising
- regulating (31) the DC voltage (21) in accordance with a respective drooping output voltage curve (14, 15); and
- shifting (32) the respective output voltage curve (14, 15) by a negative voltage offset (16) if a respective driver temperature exceeds a maximum temperature threshold.

10. The method (3) of claim 9,
being performed by a driver system (1) according to any one of the claims 1-7.
